# EUROPÄISCHE PATENTSCHRIFT

(11) **EP 2 541 206 B1**
(45) Veröffentlichungstag und Bekanntmachung des Hinweises auf die Patenterteilung: **25.02.2015**
(21) Anmeldenummer: 11172268.2
(22) Anmeldetag: 30.06.2011
(51) Int. Cl.: G01C 21/36, H04H 20/55, G08G 1/09, H04H 60/51

(54) **Verfahren zum Empfangen von Verkehrsdaten mittels einer Navigationseinrichtung**
Method of receiving traffic data by means of a navigation device
Procédé de réception de données de trafic à l'aide d'un dispositif de navigation

(43) Veröffentlichungstag der Anmeldung: 02.01.2013
(73) Patentinhaber: TechniSat Digital GmbH, 54550 Daun (DE)
(72) Erfinder: Wierschin, Torsten, Dipl.-Inform., 17493 Greifswald (DE)

(56) Entgegenhaltungen:
- EP-A2- 1 139 065
- EP-A2- 1 515 466
- DE-A1-102005 054 573
- US-A1- 2006 276 150

## Beschreibung

Die Erfindung betrifft ein Verfahren zum Empfangen von Verkehrsdaten mittels einer Navigationseinrichtung und eine Navigationseinrichtung zum Ausführen des Verfahrens.

Eine herkömmliche Navigationseinrichtung berechnet unter Verwendung von Landkartendaten eine Route, welche von einer Position der Navigationseinrichtung zu einer Zielposition führt.

Die Position der Navigationseinrichtung wird meist unter Verwendung eines Satellitennavigationssystems bestimmt, beispielsweise unter Verwendung von GPS, GLONASS oder GALILEO. Dazu empfängt die Navigationseinrichtung mithilfe einer Satellitenantenne die Signale mehrerer geostationärer Satelliten und wertet diese Signale aus.

Die Zielposition wird in der Regel aus einem Ziel bestimmt, das ein Benutzer der Navigationseinrichtung über eine Eingabeeinrichtung, beispielsweise eine Tastatur oder einen Berührungsbildschirm, öder mittels Sprache in die Navigationseinrichtung eingibt.

Die Route kann mittels einer Recheneinheit der Navigationseinrichtung berechnet werden, welche einen Routen-Berechnungsalgorithmus ausführt. Bei der Routenberechnung werden Landkartendaten verwendet, die raumbezogene Objekte und diesen zugeordnete Informationen repräsentieren, beispielsweise Straßen, Wege, Plätze, Eisenbahnlinien, Flüsse, Gebäude, Brücken, Geländeformen, Landesgrenzen, Parkmöglichkeiten, Raststätten, Verkehrsregelungen, Geschwindigkeitsbegrenzungen und Ortschaften. Die Landkartendaten sind in der Regel in einer nichtflüchtigen Speichereinheit der Navigationseinrichtung abgelegt, beispielsweise auf einer CD-ROM, auf einer integrierten Festplatte oder in einem Flash-Speicher.

Nach der Routenberechnung kann die Route oder ein Abschnitt der Route auf einem der Navigationseinrichtung zugeordneten Bildschirm angezeigt werden. Dadurch kann ein Benutzer der Navigationseinrichtung eine räumliche Vorstellung von der Route oder von einem vor ihm liegenden Routenabschnitt entwickeln, was ihm beispielsweise ermöglicht, Fahrmanöver vorausschauend zu planen.

Ferner kann nach der Routenberechnung eine Zielführung gestartet werden. Als Zielführung bezeichnet man einen Prozess, der einen Benutzer der Navigationseinrichtung entlang der Route leitet. Während der Zielführung kann die Navigationseinrichtung grafische und akustische Fahranweisungen an den Benutzer ausgeben, die anhand der Route und der aktuellen Position der Navigationseinrichtung generiert werden. Falls während der Zielführung von der Route abgewichen wird oder Verkehrsstörungen auftreten, kann die Route neu berechnet werden.

Manche Navigationseinrichtungen verfügen über eine Rundfunk-Empfangseinheit (Tuner) zum Empfang digital codierter Verkehrsdaten. Die Verkehrsdaten werden von Verkehrsinformationsdiensten, wie beispielsweise TMC, TMC-Pro, XM NavTraffic oder TPEG, bereitgestellt und repräsentieren Verkehrsmeldungen zu Staus, Unfällen, Baustellen und anderen Verkehrsstörungen.

Nach ihrem Empfang durch eine Navigationseinrichtung können die Verkehrsdaten decodiert und danach ausgegeben werden, beispielsweise auf einem Bildschirm oder als synthetische Sprache. Zusätzlich oder alternativ dazu können die decodierten Verkehrsdaten auch bei einer Routenberechnung berücksichtigt werden oder eine Routen-Neuberechnung auslösen.

Beispielsweise wird bei dem Verkehrsinformationsdienst TMC (Traffic Message Channel) eine Verkehrsmeldung in Form sogenannter ,TMC-Verkehrsdaten' übertragen, die innerhalb einer Sendeschleife zyklisch wiederholt werden. Die TMC-Verkehrsdaten sind nach dem Alert-C-Standard codiert, was das Ausgeben einer Verkehrsmeldung in verschiedenen Sprachen ermöglicht.

Verkehrsdaten sind in der Regel Teil digital codierter Zusatzinformationen, welche von einigen Rundfunksendern zusätzlich zu Hörprogrammen ausgestrahlt werden und als 'Radiodaten' bezeichnet werden. Außer Verkehrsdaten können die Radiodaten auch Sendernamen, Musiktitel, alternative Empfangsfrequenzen, Radiotext, Grafiken, Programmtyp-Kennungen usw. enthalten.

Beispielsweise kann ein über UKW verbreitetes Rundfunksignal neben Audiosignalen auch Radiodaten aufweisen, die nach dem RDS(Radio Data System)-Protokoll codiert sind und als 'RDS-Radiodaten' bezeichnet werden. Die RDS-Radiodaten enthalten einen PI(Programme Identification)-Code, anhand dessen sich das Rundfunksignal einer bestimmten Senderkette zuordnen lässt. Eine Senderkette umfasst mehrere Rundfunksender an unterschiedlichen Standorten, die ein bestimmtes Hörprogramm gemeinsam ausstrahlen.

Der PI-Code weist unter anderem einen Ländercode (CC, Country Code), eine Sendebereichskennung (MGS, Message Geographical Scope), eine Ortstabellennummer (LTN, Location Table Number) und eine Dienstkennung (SID, Service Identifier) auf.

Der Ländercode spezifiziert das Land (Nationalstaat) des Rundfunksenders, welcher das Rundfunksignal ausstrahlt. Abgesehen von wenigen Ausnahmen ist jedem Land ein anderer Ländercode zugeordnet.

Die Sendebereichskennung (auch 'Regionskennung' genannt) spezifiziert den Sendebereich, in welchem das Rundfunksignal empfangbar ist, wobei folgende Sendebereiche existieren, die hier ihrer Größe nach aufsteigend geordnet aufgezählt werden: lokal, regional, national, supranational und international.

Alternativ zu RDS-Radiodaten kann ein Rundfunksignal auch Radiodaten enthalten, die nach einem anderen Protokoll codiert sind, beispielsweise nach dem RBDS(Radio Broadcast Data System)-Protokoll.

EP 1 515 466 A2 offenbart den Empfang verschiedener Rundfunksender abhängig von der Fahrzeugposition sowie eine vorgegebene Mindest-Zeitdauer, während der im Grenzgebiet Verkehrsinformation für jedes angrenzende Land aus den zugehörigen RDS-Radiodaten gewonnen wird.

Weiterhin können Radiodaten außer über UKW auch mittels anderer Rundfunkübertragsverfahren verbreitet werden, beispielsweise mittels DAB (Digital Audio Broadcasting), DRM (Digital Radio Mondiale), DVB (Digital Video Broadcasting), IBOC (In Band On Channel) oder Satellitenradio.

Einige Navigationseinrichtungen besitzen eine Rundfunk-Empfangseinheit, die zum Empfang von Hörprogrammen dient. Derartige Navigationseinrichtungen werden als 'Radio-Navigationssysteme' bezeichnet. Die Rundfunk-Empfangseinheit ist in der Regel neben dem Empfang von Audiosignalen auch zum Empfang von Verkehrsdaten geeignet.

Ein Teil der Radio-Navigationssysteme verfügt zusätzlich über eine zweite Rundfunk-Empfangseinheit zum Empfang von Verkehrsdaten. Diese als ,Doppeltuner-Konzept' bezeichnete Lösung bietet den Vorteil, dass mittels der zweiten Rundfunk-Empfangseinheit Verkehrsdaten auch dann empfangen werden können, wenn ein von der ersten Rundfunkempfangseinheit empfangenes Hörprogramm keine Verkehrsdaten aufweist.

Normalerweise ist ein Radio-Navigationssystem fest in einem Fahrzeug eingebaut. Ein derartiges Radio-Navigationssystem besitzt einen vom Fahrzeuginnenraum aus sichtbaren Bildschirm, auf dem unter anderem Landkarten, Fahranweisungen und Informationen zu Hörprogrammen dargestellt werden. Alternativ kann ein Radio-Navigationssystem aber auch aus einem fest in einem Fahrzeug eingebauten Rundfunkempfänger und einer transportablen Navigationseinrichtung bestehen, die über eine Datenverbindung, beispielsweise ein Datenkabel, miteinander verbunden sind.

Manche Radio-Navigationssysteme verfügen über Zusatzfunktionen und sind dadurch beispielsweise in der Lage, Audiosignale oder Videosignale von externen Medien oder Geräten, wie CDs, Mobiltelefonen oder Speicherstiften, wiederzugeben, als Freisprecheinrichtung zu fungieren oder von einer Rückfahrkamera gelieferte Bilder anzuzeigen.

An der Position einer Navigationseinrichtung mit einer Rundfunk-Empfangseinheit sind normalerweise mehrere Rundfunksender empfangbar, welche eine Vielzahl von Verkehrsdaten liefern. Allerdings sind die von diesen Verkehrsdaten repräsentierten Verkehrsmeldungen teilweise redundant oder für die Position beziehungsweise eine von der Navigationseinrichtung berechnete Route irrelevant. Das führt zur Vergeudung von Empfangsressourcen der Rundfunk-Empfangseinheit für den mehrmaligen Empfang gleicher Verkehrsmeldungen oder für den Empfang irrelevanter Verkehrsmeldungen. Diese Empfangsressourcen stehen dann möglicherweise nicht mehr für den Empfang relevanter Verkehrsmeldungen zur Verfügung.

Des Weiteren besteht die Gefahr, dass ein Fahrzeugführer durch irrelevante Verkehrsmeldungen, welche auf einem Bildschirm oder als synthetische Sprache an ihn ausgegeben werden, unnötig vom Verkehrsgeschehen abgelenkt wird, wodurch das Unfallrisiko steigt.

Folglich stellt sich die Aufgabe, den Empfang von Verkehrsdaten mittels einer Navigationseinrichtung zu optimieren.

Die Aufgabe wird durch das erfindungsgemäße Verfahren zum Empfangen von Verkehrsdaten mittels einer Navigationseinrichtung gelöst, welches die im unabhängigen Anspruch 1 angegebenen Schritte aufweist.

Durch das erfindungsgemäße Empfangen der Rundfunksignale zweier Rundfunksender, die Verkehrsdaten aussenden, anstelle nur eines solchen Rundfunksenders, kann die Anzahl erhaltener unterschiedlicher Verkehrsmeldungen und damit auch die Anzahl erhaltener relevanter Verkehrsmeldungen erhöht werden.

Ferner kann durch das Berücksichtigen der Position der Navigationseinrichtung beim Auswählen der beiden Rundfunksender die Relevanz der erhaltenen Verkehrsmeldungen gegenüber bekannten Verfahren verbessert werden.

Weiterhin werden beim Festlegen der ersten Zeitperiode und der zweiten Zeitperiode Attribute des Primärsenders und des Sekundärsenders berücksichtigt. Ein solches Attribut kann beispielsweise der Ländercode, die Empfangsqualität oder der Sendebereich eines jeweiligen Rundfunksenders sein. Dadurch können Anzahl und Relevanz empfangener Verkehrsmeldungen weiter erhöht werden.

Aufgrund der vorgenannten Vorzüge ermöglicht die Erfindung das vorausschauende Bereitstellen einer optimalen Menge und Art von Verkehrsdaten.

Zusätzlich zu dem erfindungsgemäßen Verfahren wird eine Navigationseinrichtung gemäß der Erfindung bereitgestellt.

Die Navigationseinrichtung weist eine Positionsbestimmungseinheit, eine Rundfunk-Empfangseinheit und eine Steuereinheit auf, die gemäß dem unabhängigen Anspruch 14 eingerichtet sind.

Weitere Ausführungsformen der Erfindung sind in den abhängigen Patentansprüchen beschrieben.

Im Folgenden wird die Erfindung anhand von Ausführungsformen weiter erläutert, wobei die Figuren Folgendes darstellen:
Figur 1 zeigt ein Blockschaltbild einer Navigationseinrichtung gemäß einer Ausführungsform der Erfindung.
Figur 2 zeigt ein Ablaufschema für das Auswählen eines Primärsenders gemäß einer Ausführungsform der Erfindung.
Figur 3 zeigt ein Ablaufschema für das Auswählen eines Sekundärsenders gemäß einer Ausführungsform der Erfindung.
Figur 4 zeigt eine Route zum Erläutern eines Verfahrens gemäß einer Ausführungsform der Erfindung.

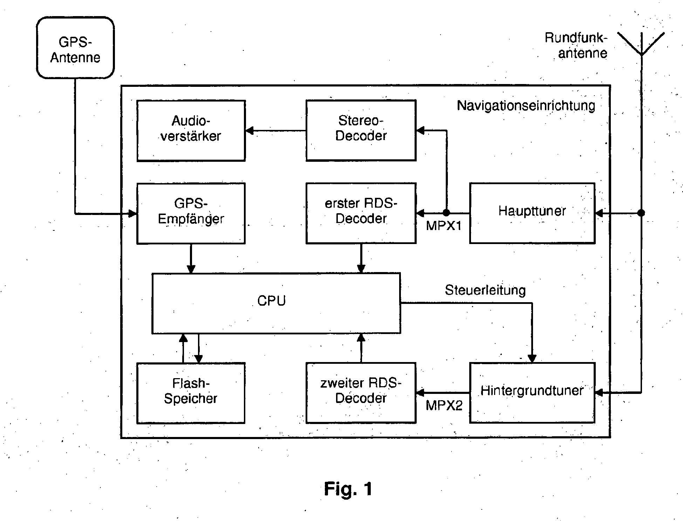

Figur 1 zeigt ein Blockschaltbild einer Navigationseinrichtung gemäß einer Ausführungsform der Erfindung.

Die gezeigte Navigationseinrichtung weist mehrere Funktionsmodule auf, die als Rechtecke dargestellt sind. Jedes der Funktionsmodule kann mittels eines separaten integrierten Schaltkreises realisiert sein. Alternativ dazu können auch mehrere der gezeigten Funktionsmodule in einem integrierten Schaltkreis vereinigt sein oder ein Funktionsmodul kann mittels mehrerer integrierter Schaltkreise realisiert sein, die miteinander verbunden sind. Ferner kann ein Funktionsmodul auch als Software-Modul vorliegen, welches von einem Prozessor ausführbar ist. Außer den in Figur 1 gezeigten Funktionsmodulen kann die Navigationseinrichtung noch weitere Funktionsmodule aufweisen.

Bei der Navigationseinrichtung handelt es sich um ein Radio-Navigationssystem mit zwei Rundfunk-Empfangseinheiten, nämlich einem Haupttuner und einem Hintergrundtuner, welche jeweils zum Empfangen von Rundfunksignalen eingerichtet sind. Dazu verfügen der Haupttuner und der Hintergrundtuner über eine gemeinsame Rundfunkantenne. Im vorliegenden Fall handelt es sich um eine UKW-Rundfunkantenne. Alternativ dazu können der Haupttuner und der Hintergrundtuner auch jeweils mit einer eigenen Rundfunkantenne ausgestattet sein.

Der Haupttuner ist ferner derart eingerichtet, dass er aus einem empfangenen Rundfunksignal ein erstes Multiplexsignal (MPX1) gewinnen und an einen Stereo-Decoder und einen ersten RDS-Decoder übertragen kann. Dazu verfügt der Haupttuner unter anderem über einen FM-Demodulator (nicht gezeigt). Das erste Multiplexsignal kann neben Audiosignalen auch RDS-Radiodaten mit TMC-Verkehrsdaten aufweisen.

Der Stereo-Decoder ist derart ausgeführt, dass er den Audiosignal-Anteil des Multiplexsignals decodieren kann, sodass an seinem Ausgang ein decodiertes Audiosignal bereitgestellt wird. Das Audiosignal kann von dem Stereo-Decoder an einen Audioverstärker übertragen und von diesem verstärkt werden. Danach kann das Audiosignal von dem Audioverstärker an eine externe Lautsprecheranlage (nicht gezeigt) übertragen und von dieser wiedergegeben werden.

Parallel dazu kann der erste RDS-Decoder den RDS-Radiodaten-Anteil des ersten Multiplexsignals derart decodieren, dass decodierte RDS-Radiodaten bereitgestellt werden. Die RDS-Radiodaten können unter anderem Sendernamen, Musiktitel, alternative Empfangsfrequenzen, Radiotext, Grafiken, Programmtyp-Kennungen und TMC-Verkehrsdaten enthalten.

Nach ihrer Übertragung an eine Steuereinheit in Form eines zentralen Mikroprozessors (CPU) durch den ersten RDS-Decoder können die RDS-Radiodaten auf unterschiedliche Art weiterverarbeitet werden. Beispielsweise können aus den Radiodaten Textinformationen extrahiert und mittels einer Anzeigeeinheit (nicht gezeigt) ausgegeben werden. Ferner können mittels des Mikroprozessors in den RDS-Radiodaten enthaltene TMC-Verkehrsdaten decodiert und zum Weiterverarbeiten bereitgestellt werden.

Der Hintergrundtuner ist derart eingerichtet, dass er aus einem empfangenen Rundfunksignal ein zweites Multiplexsignal (MPX2) gewinnen und an einen zweiten RDS-Decoder übertragen kann. Außerdem lässt sich mit dem Hintergrundtuner ein Bandscan durchführen, das heißt, ein bestimmter Frequenzbereich nach empfangbaren Rundfunksendern absuchen (Sendersuchlauf).

Daneben kann der Hintergrundtuner zur Verbesserung der Qualität eines vom Haupttuner empfangenen Hörprogramms mittels Phasendiversität genutzt werden. Wird der Hintergrundtuner derart genutzt, steht er für keine andere Nutzung zur Verfügung. Insbesondere kann der Hintergrundtuner in dieser Zeit nicht für den Empfang eines anderen Rundfunksenders als dem vom Haupttuner empfangenen Rundfunksender oder für einen Sendersuchlauf eingesetzt werden.

Der zweite RDS-Decoder kann das zweite Multiplexsignal derart decodieren, dass decodierte RDS-Radiodaten bereitgestellt werden. Nach dem Übertragen der decodierten RDS-Radiodaten an den Mikroprozessor können mittels des Mikroprozessors in den RDS-Radiodaten enthaltene TMC-Verkehrsdaten decodiert und zum Weiterverarbeiten bereitgestellt werden.

Außerdem besitzt die Navigationseinrichtung eine mit einer GPS-Antenne verbundene Positionsbestimmungseinheit in Form eines GPS-Empfängers. Der GPS-Empfänger gewinnt Positionskoordinaten, welche die Position der Navigationseinrichtung repräsentieren, aus Satellitensignalen, welche mittels einer GPS-Antenne empfangen werden, und übermittelt die Positionskoordinaten an den Mikroprozessor.

Gemäß einer anderen Ausführungsform der Erfindung kann anstelle des GPS-Empfängers auch eine andere Art von Positionsbestimmungseinheit verwendet werden, beispielsweise ein mit einer passenden Antenne ausgestatteter GALILEO-Empfänger oder GLONASS-Empfänger.

Der Mikroprozessor ist unter anderem dazu in der Lage, die von dem GPS-Empfänger erhaltenen Positionskoordinaten weiterzuverarbeiten, beispielsweise für eine Routenberechnung oder eine Zielführung. Daneben kann der Mikroprozessor eine Liste von Rundfunksendern erstellen, welche an der Position der Navigationseinrichtung empfangbar sind und Verkehrsdaten aussenden. Diese Liste wird im Folgenden als Senderliste bezeichnet.

Weiterhin weist die Navigationseinrichtung eine mit dem Mikroprozessor verbundene Speichereinheit in Form eines nichtflüchtigen Speichers auf. Im vorliegenden Fall handelt es sich dabei um einen Flash-Speicher. Dieser enthält unter anderen Landkartendaten in Form einer Karten-Datenbank.

Die Karten-Datenbank ist in der Art einer Georeferenz-Datenbank eingerichtet, sodass sich mittels der Karten-Datenbank einer Position das Land zuordnen lässt, in dem sich die Position befindet. Ferner ist die Karten-Datenbank derart eingerichtet, dass sich mittels der Karten-Datenbank einer Position der Ländercode des Landes zuordnen lässt, in dem sich die Position befindet.

Daneben enthält die Speichereinheit einen TMC-Decoder (nicht gezeigt) in Form eines Software-Moduls. Der TMC-Decoder dient zum Decodieren digital codierter TMC-Verkehrsdaten, welche in RDS-Radiodaten enthalten sind, die der erste RDS-Decoder oder der zweite RDS-Decoder an den Mikroprozessor liefert. Gemäß einer anderen Ausführungsform der Erfindung kann der TMC-Decoder auch in einer anderen Form realisiert sein, beispielsweise als separater integrierter Schaltkreis.

Ferner kann die oben genannte Senderliste bei Bedarf in der Speichereinheit abgelegt werden.

Die in dem Flash-Speicher abgelegten Daten, beispielsweise die Daten der Karten-Datenbank und der TMC-Decoder, können bei Bedarf in einen nicht gezeigten Arbeitsspeicher (RAM) des Mikroprozessors übertragen und dort verwendet oder verarbeitet werden. Daher kann der TMC-Decoder von dem Mikroprozessor ausgeführt werden. Umgekehrt können auch Daten von dem Arbeitsspeicher des Mikroprozessors in den Flash-Speicher übertragen und dort abgelegt werden.

Ferner ist der Mikroprozessor über eine Steuerleitung mit dem Hintergrundtuner verbunden, sodass der Mikroprozessor über die Steuerleitung Steuersignale an den Hintergrundtuner übermitteln kann. Mittels eines solchen Steuersignals lässt sich beispielsweise die Empfangsfrequenz des Hintergrundtuners einstellen. Mit anderen Worten lässt sich der Hintergrundtuner mittels des Steuersignals auf eine bestimmte Empfangsfrequenz abstimmen. Auf diese Weise kann der Mikroprozessor den Hintergrundtuner steuern.

Im Folgenden wird eine Ausführungsform des erfindungsgemäßen Verfahrens beschrieben, welche mittels der in Figur 1 gezeigten Navigationseinrichtung ausgeführt werden kann.

Beim Verfahrensschritt (a) wird mittels des GPS-Empfängers eine Position bestimmt, an der sich die Navigationseinrichtung befindet. Dazu empfängt der GPS-Empfänger unter Verwendung der GPS-Antenne GPS-Daten und wertet diese aus, sodass Positionskoordinaten in einem bestimmten Datenformat, beispielsweise dem NMEA(National Marine Electronics Association)-Format, bereitgestellt werden. Die Positionskoordinaten werden von dem GPS-Empfänger an den Mikroprozessor übertragen.

Ferner wird beim Verfahrensschritt (b) eine Senderliste aller Rundfunksender erstellt, deren Rundfunksignale an der Position der Navigationseinrichtung empfangbar sind und TMC-Verkehrsdaten aufweisen. Dazu wird unter Verwendung des Hintergrundtuners ein Sendersuchlauf durchgeführt.

Während des Sendersuchlaufs wird der Hintergrundtuner von dem Mikroprozessor derart gesteuert, dass die Empfangsfrequenz des Hintergrundtuners einen vorgegebenen Frequenzbereich durchläuft, beispielsweise den Frequenzbereich zwischen 87,5 MHz und 108,0 MHz. Wird dabei ein erstes empfangbares Rundfunksignal gefunden, stoppt der Sendersuchlauf. Das heißt, die aktuelle Empfangsfrequenz wird für eine gewisse Zeitspanne beibehalten, in welcher der Empfang des Rundfunksignals fortgesetzt wird.

Ein Rundfunksignal gilt dann als "empfangbar" im Sinne dieser Druckschrift, wenn das Rundfunksignal eine vorgegebene Mindest-Empfangsqualität aufweist. Die Empfangsqualität bemisst sich beispielsweise nach der Feldstärke, nach dem Ultraschall-Rauschen oder nach der Verzerrung des empfangenen Rundfunksignals. Außerdem kann sich die Empfangsqualität auch nach der Anzahl der innerhalb einer bestimmten Zeitspanne fehlerfrei empfangenen TMC-Verkehrsdaten-Pakete bemessen. Diese Anzahl kann unter Verwendung des zweiten RDS-Decoders und des Mikroprozessors bestimmt werden.

Mittels des zweiten RDS-Decoders wird ein möglicherweise vorhandener RDS-Radiodaten-Anteil des von dem Hintergrundtuner bereitgestellten Multiplexsignals decodiert, sodass decodierte RDS-Radiodaten bereitgestellt werden. Unter Verwendung des Mikroprozessors wird geprüft, ob am Ausgang des zweiten RDS-Decoders decodierte RDS-Radiodaten zur Verfügung stehen.

Wenn am Ausgang des zweiten RDS-Decoders keine decodierten RDS-Radiodaten zur Verfügung stehen, wird der Sendersuchlauf fortgesetzt, wobei die Empfangsfrequenz des Hintergrundtuners weiter verändert wird.

Wenn dagegen am Ausgang des zweiten RDS-Decoders decodierte RDS-Radiodaten zur Verfügung stehen, wird mittels des Mikroprozessors geprüft, ob die RDS-Radiodaten TMC-Verkehrsdaten aufweisen. Dazu werden beispielsweise die RDS-Radiodaten auf den Zustand eines darin enthaltenen Bits überprüft, welches das Vorhandensein von TMC-Verkehrsdaten anzeigt.

Wenn die RDS-Radiodaten keine TMC-Verkehrsdaten aufweisen, wird der Sendersuchlauf fortgesetzt.

Wenn dagegen die RDS-Radiodaten TMC-Verkehrsdaten aufweisen, wird dem Rundfunksender, der das Rundfunksignal aussendet, mittels des Mikroprozessors ein Listenplatz in der Senderliste zugewiesen. Auf dem Listenplatz werden dem Rundfunksender zugeordnete Attribute in Form digitaler Daten abgelegt, beispielsweise der Ländercode, die Empfangsfrequenz, die Empfangsqualität und der Sendebereich des Rundfunksenders. Der Ländercode und der Sendebereich können aus dem PI-Code des Rundfunksenders gewonnen werden.

Danach wird der Sendersuchlauf durch Veränderung der Empfangsfrequenz des Hintergrundtuners fortgesetzt, bis ein weiteres empfangbares Rundfunksignal gefunden wird oder das Ende des Frequenzbereichs erreicht ist. Wird ein weiteres empfangbares Rundfunksignal gefunden, wird genauso verfahren, wie bei dem oben genannten ersten empfangbaren Rundfunksignal. Auf diese Weise können mehreren Rundfunksendern Listenplätze in der Senderliste zugewiesen werden.

Ergänzend ist zu bemerken, dass auch einem vom Haupttuner empfangenen Rundfunksender ein Listenplatz in der Senderliste zugewiesen werden kann, wenn dieser Rundfunksender Verkehrsdaten aussendet. Somit trägt auch der Haupttuner zur Pflege der Senderliste bei.

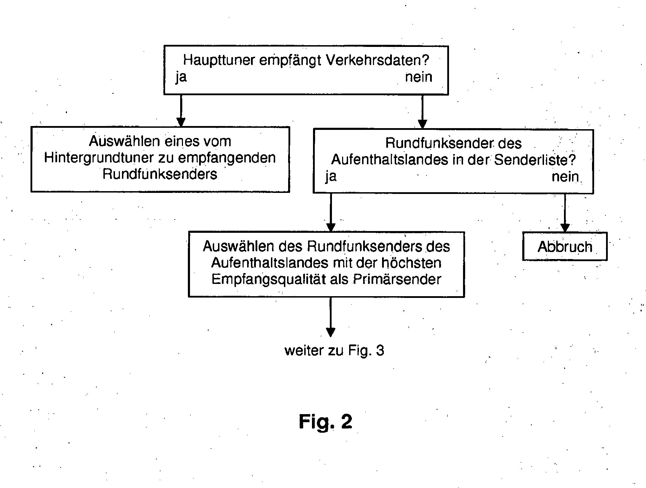

Bei der folgenden Erläuterung des Verfahrensschritts (c) wird auf Figur 2 Bezug genommen.

Bei dem Verfahrensschritt (c) soll ein Rundfunksender als Primärsender ausgewählt werden. Dazu wird zunächst unter Verwendung des ersten RDS-Decoders und des Mikroprozessors geprüft, ob der Haupttuner ein Rundfunksignal mit Verkehrsdaten empfängt.

Empfängt der Haupttuner kein Rundfunksignal mit Verkehrsdaten, wird geprüft, ob die Senderliste zumindest einen Rundfunksender des Landes aufweist, in dem sich die Navigationseinrichtung befindet. Dieses Land wird im Folgenden als Aufenthaltsland bezeichnet. Dazu wird zunächst anhand der von dem GPS-Empfänger gelieferten Position der Navigationseinrichtung unter Verwendung der Karten-Datenbank der Ländercode des Aufenthaltslandes ermittelt. Anschließend werden die Ländercodes der Rundfunksender der Senderliste mit dem Ländercode des Aufenthaltslandes verglichen. Stimmt der Ländercode eines Rundfunksenders mit dem Ländercode des Aufenthaltslandes überein, handelt es sich um einen Rundfunksender des Aufenthaltslandes.

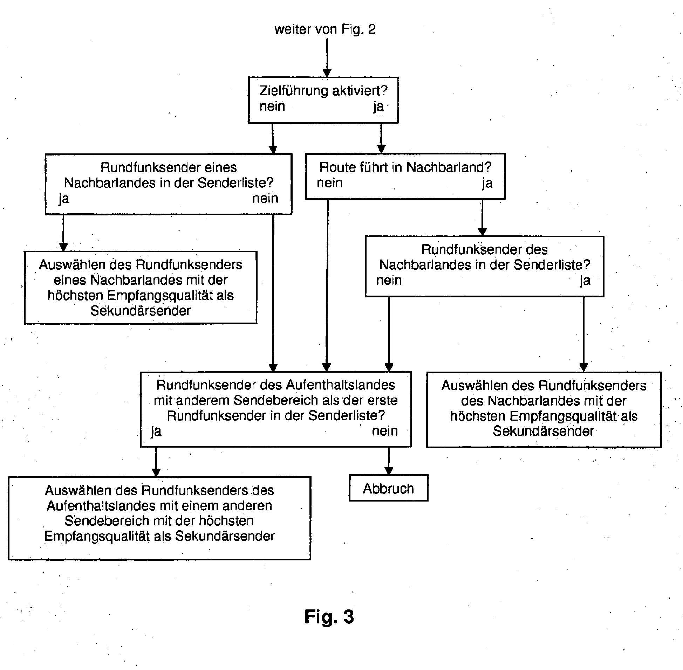

Weist die Senderliste einen Rundfunksender oder mehrere Rundfunksender des Aufenthaltslandes auf, wird aus diesen Rundfunksendern der Rundfunksender mit der höchsten Empfangsqualität als Primärsender ausgewählt. Danach wird das erfindungsgemäße Verfahren mit dem Verfahrensschritt (d) fortgesetzt, der unten bezugnehmend auf Figur 3 beschrieben wird.

Weist die Senderliste dagegen keinen Rundfunksender des Aufenthaltslandes auf, wird das erfindungsgemäße Verfahren abgebrochen, da keine Verkehrsdaten von einem Rundfunksender des Aufenthaltslandes empfangbar sind. Das Verfahren kann später mit dem ersten Verfahrensschritt (Bestimmen einer Position der Navigationseinrichtung) erneut gestartet werden.

Empfängt der Haupttuner im Gegensatz zu der oben betrachteten Situation ein Rundfunksignal mit Verkehrsdaten, wird anstelle von zwei Rundfunksendern nur ein vom Hintergrundtuner zu empfangender Rundfunksender bestimmt. Dieser Rundfunksender kann in Abhängigkeit von einer Position der Navigationseinrichtung und von einem oder mehreren Attributen des vom Haupttuner empfangenen Rundfunksenders aus der Senderliste ausgewählt werden.

Weist beispielsweise der vom Haupttuner empfangene Rundfunksender einen überregionalen Sendebereich auf, wird ein vom Hintergrundtuner zu empfangender Rundfunksender mit einem regionalen Sendebereich ausgewählt. Weist dagegen der vom Haupttuner empfangene Rundfunksender einen regionalen Sendebereich auf, wird ein vom Hintergrundtuner zu empfangender Rundfunksender mit einem überregionalen Sendebereich ausgewählt.

Gemäß den vorangegangenen Ausführungen werden von der Navigationseinrichtung immer nur maximal zwei Rundfunksender empfangen, welche Verkehrsdaten aussenden. Daher ist folgendes Szenario möglich: Zunächst werden, da der Haupttuner keine Verkehrsdaten empfängt, zwei Rundfunksender aus der Senderliste ausgewählt und vom Hintergrundtuner empfangen. Später wird der Haupttuner durch einen Benutzer derart abgestimmt, dass er Verkehrsdaten empfängt. Infolgedessen wird die Anzahl der vom Hintergrundtuner empfangenen Rundfunksender von zwei auf eins reduziert. Folglich wird vom Hintergrundtuner nur noch ein Rundfunksender empfangen, nämlich derjenige, welcher am besten zur Position der Navigationseinrichtung und zu dem vom Haupttuner empfangenen Rundfunksender passt. Wird der Haupttuner später durch einen Benutzer derart abgestimmt, dass er keine Verkehrsdaten mehr empfängt, wird die Anzahl der vom Hintergrundtuner empfangenen Rundfunksender wieder auf zwei erhöht. Dabei kann der vormals vom Haupttuner empfangene Rundfunksender nun als vom Hintergrundtuner empfangener Primärsender verwendet werden.

Bei der folgenden Erläuterung des Verfahrensschritts (d) wird auf **Figur 3** Bezug genommen.

Bei dem Verfahrensschritt (d) soll zusätzlich zu dem beim Verfahrensschritt (c) ausgewählten Primärsender ein weiterer Rundfunksender als Sekundärsender ausgewählt werden. Dazu wird zunächst unter Verwendung des Mikroprozessors geprüft, ob die Zielführung der Navigationseinrichtung aktiviert ist.

Ist die Zielführung nicht aktiviert, wird geprüft, ob die Senderliste zumindest einen Rundfunksender eines Nachbarlandes aufweist, indem die Ländercodes der Rundfunksender der Senderliste mit dem Ländercode des Aufenthaltslandes verglichen werden. Stimmt der Ländercode eines Rundfunksenders nicht mit dem Ländercode des Aufenthaltslandes überein, wird angenommen, dass es sich um einen Rundfunksender eines Nachbarlandes handelt.

Zu bemerken ist, dass der Empfang eines Rundfunksenders eines Nachbarlandes darauf hindeutet, dass sich die Navigationseinrichtung in der Nähe einer Landesgrenze befindet, beispielsweise in einer Entfernung von weniger als 50 Kilometer zu einer Landesgrenze.

Weist die Senderliste einen Rundfunksender oder mehrere Rundfunksender eines Nachbarlandes auf, wird aus diesen Rundfunksendern der Rundfunksender mit der höchsten Empfangsqualität als Sekundärsender ausgewählt. Diese Auswahl basiert auf der Annahme, dass die Navigationseinrichtung die Landesgrenze zu dem Nachbarland überschreiten wird und deshalb Verkehrsdaten des Nachbarlandes benötigt werden. Damit ist der Verfahrensschritt (d) beendet.

Weist die Senderliste dagegen keinen Rundfunksender eines Nachbarlandes auf, wird geprüft, ob die Senderliste zumindest einen Rundfunksender des Aufenthaltslandes aufweist, dessen Sendebereich sich vom Sendebereich des Primärsenders unterscheidet.

Damit soll beispielsweise sichergestellt werden, dass beim Empfang von Verkehrsdaten eines Lokalsenders keine Verkehrsdaten eines weiteren Lokalsenders empfangen werden, da diese den bereits empfangenen Verkehrsdaten gleichen würden. Stattdessen sollen Verkehrsdaten von Rundfunksendern mit unterschiedlichen Sendebereichen empfangen werden, da diese Verkehrsdaten normalerweise eine größere Varianz aufweisen.

Weist die Senderliste einen Rundfunksender oder mehrere Rundfunksender des Aufenthaltslandes auf, deren Sendebereiche sich vom Sendebereich des Primärsenders unterscheiden, wird aus diesen Rundfunksendern der Rundfunksender mit der höchsten Empfangsqualität als Sekundärsender ausgewählt. Damit ist der Verfahrensschritt (d) beendet.

Weist die Senderliste dagegen keinen Rundfunksender des Aufenthaltslandes auf, dessen Sendebereich sich vom Sendebereich des Primärsenders unterscheidet, wird das Verfahren abgebrochen, ohne dass ein Sekundärsender ausgewählt wird. Das Verfahren kann später, beispielsweise nach dem Empfangen von Verkehrsdaten des Primärsenders, erneut gestartet werden.

Ist die Zielführung im Gegensatz zu der oben betrachteten Situation aktiviert, wird unter Verwendung des Mikroprozessors geprüft, ob die der Zielführung zugrunde liegende Route in ein Nachbarland des Aufenthaltslandes führt.

Führt die Route in kein Nachbarland, wird geprüft, ob die Senderliste zumindest einen Rundfunksender des Aufenthaltslandes aufweist, dessen Sendebereich sich vom Sendebereich des Primärsenders unterscheidet.

Weist die Senderliste einen Rundfunksender oder mehrere Rundfunksender des Aufenthaltslandes auf, deren Sendebereiche sich vom Sendebereich des Primärsenders unterscheiden, wird aus diesen Rundfunksendern der Rundfunksender mit der höchsten Empfangsqualität als Sekundärsender ausgewählt. Damit ist der Verfahrensschritt (d) beendet.

Weist die Senderliste dagegen keinen Rundfunksender des Aufenthaltslandes auf, dessen Sendebereich sich vom Sendebereich des Primärsenders unterscheidet, wird das Verfahren abgebrochen, ohne dass ein Sekundärsender ausgewählt wird. Das Verfahren kann später erneut gestartet werden.

Führt die Route dagegen in ein Nachbarland des Aufenthaltslandes, wird geprüft, ob die Senderliste zumindest einen Rundfunksender des Nachbarlandes aufweist. Dazu wird zunächst unter Zuhilfenahme der Karten-Datenbank der Ländercode des Nachbarlandes ermittelt. Anschließend werden die Ländercodes der Rundfunksender der Senderliste mit dem Ländercode des Nachbarlandes verglichen. Stimmt der Ländercode eines Rundfunksenders mit dem Ländercode des Nachbarlandes überein, handelt es sich um einen Rundfunksender des Nachbarlandes.

Durch diese Prüfung wird vermieden, dass bei einer Situation, in welcher ein Rundfunksender eines Nachbarlandes empfangen wird, durch welches die Route nicht verläuft, dieser Rundfunksender als Sekundärsender ausgewählt wird. Eine derartige Situation kann beispielsweise an einem Drei-Länder-Eck vorliegen.

Weist die Senderliste einen Rundfunksender oder mehrere Rundfunksender des Nachbarlandes auf, in welches die Route führt, wird aus diesen Rundfunksendern der Rundfunksender mit der höchsten Empfangsqualität als Sekundärsender ausgewählt. Damit ist der Verfahrensschritt (d) beendet.

Weist die Senderliste dagegen keinen weiteren Rundfunksender des Nachbarlandes auf, in welches die Route führt, wird geprüft, ob die Senderliste zumindest einen Rundfunksender des Aufenthaltslandes aufweist, dessen Sendebereich sich vom Sendebereich des Primärsenders unterscheidet.

Weist die Senderliste einen Rundfunksender oder mehrere Rundfunksender des Aufenthaltslandes auf, deren Sendebereiche sich vom Sendebereich des Primärsenders unterscheiden, wird aus diesen Rundfunksendern der Rundfunksender mit der höchsten Empfangsqualität als Sekundärsender ausgewählt. Damit ist der Verfahrensschritt (d) beendet.

Weist die Senderliste dagegen keinen Rundfunksender des Aufenthaltslandes auf, dessen Sendebereich sich vom Sendebereich des Primärsenders unterscheidet, wird das Verfahren abgebrochen, ohne dass ein Sekundärsender ausgewählt wird. Das Verfahren kann später, beispielsweise nach dem Empfangen von Verkehrsdaten des Primärsenders, erneut gestartet werden.

Im Folgenden wird der Verfahrensschritt (e) erläutert.

Der Verfahrensschritt (e) dient zum Festlegen einer dem Primärsender zugeordneten ersten Zeitperiode und einer dem Sekundärsender zugeordneten zweiten Zeitperiode. Daher setzt das Ausführen des Verfahrensschritts (e) voraus, dass bei den Verfahrensschritten (c) und (d) ein Primärsender und ein Sekundärsender ausgewählt wurden.

Beim Verfahrensschritt (e) werden Attribute des Primärsenders und des Sekundärsenders berücksichtigt, beispielsweise deren Empfangsqualitäten oder Sendebereiche.

Im Folgenden wird das Festlegen der ersten Zeitperiode und der zweiten Zeitperiode unter Berücksichtigung der Empfangsqualität des Primärsenders und der Empfangsqualität des Sekundärsenders beschrieben.

Ist die Empfangsqualität des vom Primärsender empfangenen Rundfunksignals deutlich höher als die Empfangsqualität des vom Sekundärsender empfangenen Rundfunksignals, wird die erste Zeitperiode länger als die zweite Zeitperiode gewählt. Voraussetzung dafür ist, dass beide Empfangsqualitäten um mindestens einen vorgegebenen Empfangsqualität-Differenzwert differieren.

Ist dagegen die Empfangsqualität des von dem Primärsender empfangenen Rundfunksignals deutlich niedriger als die Empfangsqualität des von dem Sekundärsender empfangenen Rundfunksignals, wird die erste Zeitperiode kürzer gewählt als die zweite Zeitperiode. Voraussetzung dafür ist, dass beide Empfangsqualitäten um mindestens einen vorgegebenen Differenzwert differieren.

Im Folgenden wird das Festlegen der ersten Zeitperiode und der zweiten Zeitperiode unter Berücksichtigung des Sendebereichs des Primärsenders und des Sendebereichs des Sekundärsenders beschrieben.

Ist der Sendebereich des Primärsenders größer als der Sendebereich des Sekundärsenders, wird die erste Zeitperiode kürzer gewählt als die zweite Zeitperiode. Dies ist beispielsweise dann der Fall, wenn der Primärsender einen nationalen Sendebereich aufweist (z. B. Deutschlandfunk), also landesweit verbreitet wird, während der Sekundärsender einen supranationalen Sendebereich aufweist, also nur in einigen Bundesländern verbreitet wird (z. B. Mitteldeutscher Rundfunk).

Ist dagegen der Sendebereich des Primärsenders kleiner als der Sendebereich des Sekundärsenders, wird die erste Zeitperiode länger gewählt als die zweite Zeitperiode. Dies ist beispielsweise dann der Fall, wenn der Primärsender ein Lokalsender (z. B. Radio Dresden) ist, während der Sekundärsender ein Regionalsender (z. B. Mitteldeutscher Rundfunk Sachsen) ist.

Diese Vorgehensweise hat den Vorteil, dass die Verkehrsdaten eines in einem kleineren Gebiet verbreiteten Rundfunksenders, die normalerweise von größerer Relevanz sind, für einen längeren Zeitraum empfangen werden als die Verkehrsdaten eines in einem größeren Gebiet verbreiteten Rundfunksenders, die normalerweise von geringerer Relevanz sind.

Beim Festlegen der ersten Zeitperiode und der zweiten Zeitperiode kann eine Gesamtperiode vorgegeben sein, welche gleich der Summe aus der ersten Zeitperiode und der zweiten Zeitperiode ist. Die Dauer der Gesamtperiode beträgt beispielsweise 180 Sekunden.

Bei dem Verfahrensschritt (f) wird während der ersten Zeitperiode, das heißt für die Dauer der ersten Zeitperiode, das Rundfunksignal des Primärsenders unter Verwendung des Hintergrundtuners empfangen.

Bei dem Verfahrensschritt (g) wird während der zweiten Zeitperiode, das heißt für die Dauer der zweiten Zeitperiode, das Rundfunksignal des Sekundärsenders unter Verwendung des Hintergrundtuners empfangen.

Ergänzend ist zu bemerken, dass das Verfahren nach seinem Abbruch oder nach dem Ende seines letzten Verfahrensschritts erneut gestartet werden kann, beispielsweise sobald die Navigationseinrichtung eine neue Position erreicht hat.

Auf diese Weise kann das Verfahren mehrmals ausgeführt werden, während die Navigationseinrichtung eine Route zurücklegt. Dabei wechseln sich Phasen, in denen Rundfunksender ausgewählt werden, mit Phasen ab, in denen TMC-Verkehrsdaten empfangen werden. Der Vorteil dieser Verfahrensweise besteht darin, dass ständig (das heißt in kurzen regelmäßigen Abständen) die beiden optimalen Rundfunksender ermittelt werden, während ständig (das heißt in kurzen regelmäßigen Abständen) Verkehrsmeldungen der beiden optimalen Rundfunksender empfangen werden.

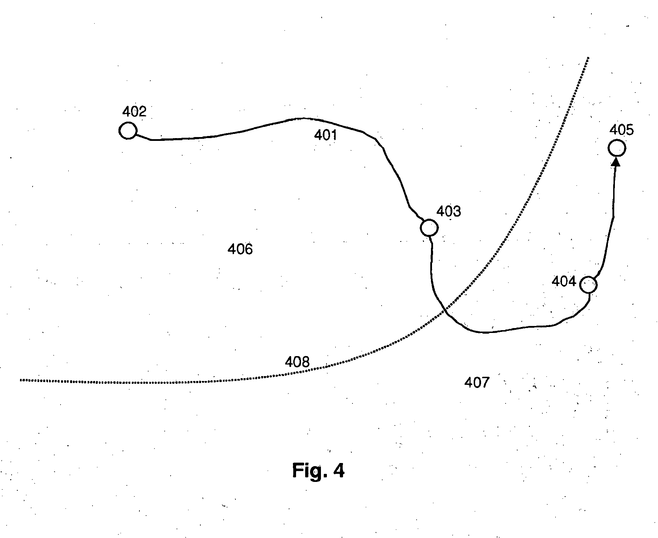

**Figur 4** zeigt eine Route 401 zum Erläutern einer Ausführungsform des erfindungsgemäßen Verfahrens. Das Verfahren gemäß Figur 4 kann beispielsweise mittels der in Figur 1 gezeigten Navigationseinrichtung ausgeführt werden.

Die Navigationseinrichtung wird mittels eines Kraftfahrzeugs entlang der Route 401 von einer Startposition 402 über eine erste Zwischenposition 403 und eine zweite Zwischenposition 404 zu einer Zielposition 405 bewegt. Die Startposition 402 und die erste Zwischenposition 403 sind in einem ersten Land 406 angeordnet, während die zweite Zwischenposition 404 und die Zielposition 405 in einem zweiten Land 407 angeordnet sind. Das erste Land 406 und das zweite Land 407 sind durch eine Landesgrenze 408 voneinander getrennt.

Als Erstes wird das erfindungsgemäße Verfahren an der Startposition 402 demonstriert.

Beim Verfahrensschritt (a) wird mittels des GPS-Empfängers die Position der Navigationseinrichtung bestimmt.

Ferner wird beim Verfahrensschritt (b) mittels des Hintergrundtuners eine Senderliste erstellt, welche folgende Daten aufweist:

| **RFS* Nr.** | **Ländercode** | **Empf.-qualität** | **Sendebereich** | **Empfanqsfrequenz** |
|---|---|---|---|---|
| 1 | E | 1,6 | regional | 88,9 MHz |
| 2 | E | 2,8 | regional | 103,5 MHz |
| 3 | E | 3,2 | national | 105,2 MHz |
| 4 | E | 3,5 | regional | 92,3 MHz |
| 5 | E | 4,0 | lokal | 100,7 MHz |

| | | | | |
|---|---|---|---|---|
| *Rundfunksender | | | | |

Die Einträge der Senderliste repräsentieren Rundfunksender, deren Rundfunksignale an der Startposition 402 empfangbar sind und Verkehrsdaten aufweisen. Jeder Eintrag weist einen Ländercode, eine Empfangsqualität, einen Sendebereich und eine Empfangsfrequenz auf. Die Empfangsqualität ist mit einer Zahl zwischen 1,0 (sehr gut) und 5,0 (sehr schlecht) bewertet.

Beim Verfahrensschritt (c) wird zunächst festgestellt, dass der Haupttuner keine Verkehrsdaten empfängt.

Ferner wird anhand der Positionskoordinaten unter Zuhilfenahme der Karten-Datenbank der Ländercode des Aufenthaltslandes bestimmt, in dem sich die Navigationseinrichtung befindet. Dieser Ländercode lautet "E". Dann wird geprüft, ob die Senderliste zumindest einen Rundfunksender mit dem Ländercode "E" aufweist. Dabei wird festgestellt, dass die Senderliste mehrere derartige Rundfunksender aufweist, nämlich die Rundfunksender 1 bis 5.

Aus den Rundfunksendern 1 bis 5 wird derjenige mit der besten Empfangsqualität als Primärsender ausgewählt, nämlich Rundfunksender 1 mit einer Empfangsqualität von 1,6. Damit ist der Verfahrensschritt (c) beendet.

Beim Verfahrensschritt (d) wird zunächst geprüft, ob eine Zielführung der Navigationseinrichtung aktiviert ist. Dies ist nicht der Fall.

Daher wird geprüft, ob die Senderliste einen Rundfunksender mit einem anderen Ländercode als "E" aufweist, also einen Rundfunksender, der mit hoher Wahrscheinlichkeit einem Nachbarland zugeordnet ist. Die Navigationseinrichtung ist aber an der Startposition 402 derart weit von der Landesgrenze 408 entfernt, dass kein solcher Rundfunksender empfangen wird.

Infolgedessen wird geprüft, ob die Senderliste zumindest einen Rundfunksender des Aufenthaltslandes mit einem anderen Sendebereich als der Primärsender aufweist. Dabei wird festgestellt, dass die Senderliste mehrere derartige Rundfunksender aufweist, nämlich die Rundfunksender 3 und 5. Rundfunksender 3 weist nämlich einen nationalen Sendebereich auf, während Rundfunksender 5 einen lokalen Sendebereich aufweist.

Aus den Rundfunksendern 3 und 5 wird derjenige mit der höchsten Empfangsqualität als Sekundärsender ausgewählt, nämlich der Rundfunksender 3 mit einer Empfangsqualität von 3,2. Damit ist der Verfahrensschritt (d) beendet.

Dann werden beim Verfahrensschritt (e) eine erste Zeitperiode und eine zweite Zeitperiode festgelegt. Im vorliegenden Fall wird dies anhand der Sendebereiche der beiden ausgewählten Rundfunksender vorgenommen. Die vorgegebene Gesamtperiode beträgt 180 Sekunden.

Der Sendebereich "regional" des Primärsenders ist kleiner als der Sendebereich "national" des Sekundärsenders. Daher wird die erste Zeitperiode länger gewählt als die zweite Zeitperiode. Beispielweise beträgt die erste Zeitperiode 135 Sekunden, während die zweite Zeitperiode 45 Sekunden beträgt. Damit ist der Verfahrensschritt (e) beendet.

Beim Verfahrensschritt (f) wird mittels des Hintergrundtuners 135 Sekunden lang das Rundfunksignal des Primärsenders empfangen.

Ferner wird beim Verfahrensschritt (g) mittels des Hintergrundtuners 45 Sekunden lang das Rundfunksignal des Sekundärsenders empfangen. Damit ist das erfindungsgemäße Verfahren an der Startposition 402 beendet.

Als Zweites wird das Ausführen des erfindungsgemäßen Verfahrens an der ersten Zwischenposition 403 demonstriert.

Beim Verfahrensschritt (a) wird mittels des GPS-Empfängers die Position der Navigationseinrichtung bestimmt.

Weiterhin wird beim Verfahrensschritt (b) mittels des Hintergrundtuners eine Senderliste erstellt, welche folgende Daten aufweist:

| **RFS* Nr.** | **Ländercode** | **Empf.-qualität** | **Sendebereich** | **Empfangsfrequenz** |
|---|---|---|---|---|
| 1 | E | 3,2 | regional | 103,5 MHz |
| 2 | E | 3,4 | national | 105,2 MHz |
| 3 | E | 3,5 | regional | 92,3 MHz |
| 4 | F | 2,1 | lokal | 101,0 MHz |
| 5 | F | 4,3 | regional | 90,1 MHz |

| | | | | |
|---|---|---|---|---|
| *Rundfunksender | | | | |

Beim Verfahrensschritt (c) wird zunächst festgestellt, dass der Haupttuner keine Verkehrsdaten empfängt.

Ferner wird anhand der Positionskoordinaten unter Zuhilfenahme der Karten-Datenbank der Ländercode des Aufenthaltslandes bestimmt. Dieser Ländercode lautet "E". Dann wird geprüft, ob die Senderliste zumindest einen Rundfunksender mit dem Ländercode "E" aufweist. Dabei wird festgestellt, dass die Senderliste mehrere derartige Rundfunksender aufweist, nämlich die Rundfunksender 1 bis 3.

Aus den Rundfunksendern 1 bis 3 wird derjenige mit der höchsten Empfangsqualität als Primärsender ausgewählt, nämlich Rundfunksender 1 mit einer Empfangsqualität von 3,2. Damit ist der Verfahrensschritt (c) beendet.

Beim Verfahrensschritt (d) wird geprüft, ob eine Zielführung der Navigationseinrichtung aktiviert ist. Dies ist nicht der Fall.

Daher wird geprüft, ob die Senderliste einen Rundfunksender mit einem anderen Ländercode als "E" aufweist, also einen Rundfunksender, der mit hoher Wahrscheinlichkeit einem Nachbarland zugeordnet ist. Dabei wird festgestellt, dass die Senderliste mehrere derartige Rundfunksender aufweist, nämlich die Rundfunksender 4 und 5, welche den Ländercode "F" aufweisen.

Aus diesen Rundfunksendern wird derjenige mit der höchsten Empfangsqualität als Sekundärsender ausgewählt, nämlich Rundfunksender 4 mit einer Empfangsqualität von 2,1. Damit ist der Verfahrensschritt (d) beendet.

Dann werden bei dem Verfahrensschritt (e) eine erste Zeitperiode und eine zweite Zeitperiode festgelegt. Im vorliegenden Fall wird dies anhand der Empfangsqualitäten der beiden ausgewählten Rundfunksender vorgenommen. Dabei ist ein Empfangsqualität-Differenzwert von 1,0 vorgegeben. Die vorgegebene Gesamtperiode beträgt 180 Sekunden.

Die Empfangsqualität des Primärsenders beträgt 3,2, während die Empfangsqualität des Sekundärsenders 2,1 beträgt. Folglich differieren die beiden Empfängsqualitäten um den Wert 1,1, welcher den vorgegebenen Empfangsqualität-Differenzwert von 1,0 überschreitet. Daher wird die erste Zeitperiode kürzer gewählt als die zweite Zeitperiode. Beispielweise beträgt die erste Zeitperiode 45 Sekunden, während die zweite Zeitperiode 135 Sekunden beträgt. Damit ist der Verfahrensschritt (e) beendet.

Beim Verfahrensschritt (f) wird mittels des Hintergrundtuners 45 Sekunden lang das Rundfunksignal des Primärsenders empfangen.

Ferner wird beim Verfahrensschritt (g) mittels des Hintergrundtuners 135 Sekunden lang das Rundfunksignal des Sekundärsenders empfangen. Damit ist das erfindungsgemäße Verfahren an der ersten Zwischenposition 403 beendet.

Als Drittes soll das Ausführen des Verfahrens an der zweiten Zwischenposition 404 demonstriert werden.

Beim Verfahrensschritt (a) wird mittels des GPS-Empfängers die Position der Navigationseinrichtung bestimmt.

Weiterhin wird beim Verfahrensschritt (b) mittels des Hintergrundtuners eine Senderliste erstellt, welche folgende Daten aufweist:

| **RFS* Nr.** | **Ländercode** | **Empf.-qualität** | **Sendebereich** | **Empfanqsfrequenz** |
|---|---|---|---|---|
| 1 | E | 2,9 | regional | 103,5 MHz |
| 2 | F | 1,8 | lokal | 101,0 MHz |
| 3 | F | 2,0 | lokal | 95,4 MHz |
| 4 | F | 2,2 | lokal | 88,8 MHz |
| 5 | E | 3,1 | regional | 92,3 MHz |

| | | | | |
|---|---|---|---|---|
| *Rundfunksender | | | | |

Beim Verfahrensschritt (c) wird zunächst festgestellt, dass der Haupttuner keine Verkehrsdaten empfängt.

Ferner wird anhand der Positionskoordinaten unter Zuhilfenahme der Karten-Datenbank der Ländercode des Aufenthaltslandes bestimmt. Dieser Ländercode lautet "F". Dann wird geprüft, ob die Senderliste zumindest einen Rundfunksender mit dem Ländercode "F" aufweist. Dabei wird festgestellt, dass die Senderliste mehrere derartige Rundfunksender aufweist, nämlich die Rundfunksender 2 bis 4.

Aus den Rundfunksendern 2 bis 4 wird derjenige mit der höchsten Empfangsqualität als Primärsender ausgewählt, nämlich der Rundfunksender 2 mit einer Empfangsqualität von 1,8. Damit ist der Verfahrensschritt (c) beendet.

Bei dem Verfahrensschritt (d) wird zunächst geprüft, ob die Zielführung der Navigationseinrichtung aktiviert ist. Das ist der Fall.

Deshalb wird mittels des Mikroprozessors geprüft, ob die der Zielführung zugrunde liegende Route 401 in ein Nachbarland des Aufenthaltslandes führt. Dabei wird festgestellt, dass dies nicht der Fall ist. Die Route 401 führt nämlich von der zweiten Zwischenposition 404 aus durch das als Aufenthaltsland deklarierte Land 407 zur Zielposition 405.

Daher wird geprüft, ob die Senderliste zumindest einen Rundfunksender des Aufenthaltslandes mit einem anderen Sendebereich als der Primärsender aufweist. Dabei wird festgestellt, dass die Senderliste keinen derartigen Rundfunksender aufweist, da die anderen Rundfunksender des Aufenthaltslandes, nämlich die Rundfunksender 3 und 4, ebenfalls einen lokalen Sendebereich aufweisen. Deshalb wird das Verfahren abgebrochen, ohne dass ein Sekundärsender ausgewählt wird.

Anschließend wird mittels des Hintergrundtuners 180 Sekunden lang das Rundfunksignal des Primärsenders empfangen. Danach kann das Verfahren erneut gestartet werden, beispielsweise sobald die Navigationseinrichtung eine andere Position erreicht hat.

Alternativ zu den vorgenannten Ausführungsbeispielen der Erfindung kann die Reihenfolge variieren, in der die Verfahrensschritte (a) bis (g) ausgeführt werden. Beispielsweise können die Verfahrensschritte (a) und (b) oder die Verfahrensschritte (f) und (g) miteinander vertauscht werden. Des Weiteren können einer oder mehrere der Verfahrensschritte (c) bis (g) mehrmals ausgeführt werden, bevor das Verfahren mit einem der Verfahrensschritte (a) oder (b) erneut gestartet wird.

Gemäß einer derartigen Ausführungsform der Erfindung werden die Verfahrensschritte (f) und (g) mehrmals hintereinander ausgeführt, bevor das Verfahren mit dem Verfahrensschritt (a) erneut gestartet wird. In diesem Fall werden die Verfahrensschritte beispielsweise in folgender Reihenfolge ausgeführt:
(a) (b) (c) (d) (e) (f) (g) (f) (g) (f) (g) (a) ...

Gemäß einer anderen Ausführungsform der Erfindung wird das oben gezeigte mehrmalige Ausführen der Verfahrensschritte (f) und (g) wiederholt, wobei jeder Wiederholung die Verfahrensschritte (d) und (e) vorausgehen. In diesem Fall werden die Verfahrensschritte beispielsweise in folgender Reihenfolge ausgeführt:
(a) (b) (c) (d) (e) (f) (g) (f) (g) (f) (g) (d) (e) (f) (g) (f) (g) (f) (g) (d) (e) (f) (g) (f) (g) (f) (g) (a) ...

Gemäß dieser Verfahrensweise wird nur der Sekundärsender anhand seiner Attribute auf seine Austauschbarkeit gegen einen besser geeigneten Rundfunksender geprüft und gegebenenfalls ausgetauscht, bevor das Verfahren mit dem Verfahrensschritt (a) erneut gestartet wird. Optional kann dabei das Wiederholen der Verfahrensschritte (d) und (e) ein vorangegangenes mindestens dreimaliges Ausführen der Verfahrensschritte (f) und (g) voraussetzen. Diese Bedingung wäre bei der vorgenannten beispielhaften Reihenfolge der Verfahrensschritte erfüllt.

Gemäß einer weiteren Ausführungsform der Erfindung wird die Anzahl der Wiederholungen eines Verfahrensschritts oder einer Abfolge mehrerer Verfahrensschritte bei jedem Ausführen des Verfahrens an die Empfangsqualität des Primärsenders oder die Empfangsqualität des Sekundärsenders angepasst.

Gemäß einer weiteren Ausführungsform der Erfindung wird der Hintergrundtuner im Falle eines Fehlers beim Empfangen des Primärsenders oder des Sekundärsenders sofort auf den jeweils anderen Rundfunksender abgestimmt. Durch diese Verfahrensweise können trotz des Fehlers Verkehrsdaten empfangen und dem TMC-Timing unterworfen werden. Unter anderem kommen folgende Fehler infrage:
- die Anzahl empfangener Verkehrsdaten-Pakete ist zu klein,
- ein Rundfunksender, welcher Verkehrsdaten aussendet, kann wegen der Verschlechterung seiner Empfangsqualität nicht mehr empfangen werden oder
- der Hintergrundtuner wurde zu lange zur Verbesserung des vom Haupttuner empfangenen Hörprogramms mittels Phasendiversität genutzt.

Gemäß einer weiteren Ausführungsform der Erfindung wird im Fall eines der oben genannten Fehler die Dauer der betroffenen Zeitperiode angepasst. Beispielsweise wird, wenn beim Empfangen des Primärsenders oder des Sekundärsenders ein Fehler auftritt, beim folgenden Empfangen des jeweiligen Rundfunksenders die zugeordnete Zeitperiode verkürzt. Bei einer geeigneten Reihenfolge der Verfahrensschritte kann dies bereits geschehen, bevor der jeweilige Rundfunksender erneut ausgewählt wird.

## Patentansprüche

1. Verfahren zum Empfangen von Verkehrsdaten mittels einer Navigationseinrichtung, die eine Positionsbestimmungseinheit, eine Rundfunk-Empfangseinheit und eine Steuereinheit aufweist, wobei das Verfahren folgende Schritte aufweist:
(a) Bestimmen einer Position (402, 403, 404, 405) der Navigationseinrichtung mittels der Positionsbestimmungseinheit,
(b) Ermitteln einer Mehrzahl von Rundfunksendern, deren Rundfunksignale an der Position (402, 403, 404,405) empfangbar sind und Verkehrsdaten aufweisen, mittels der Rundfunk-Empfangseinheit, wobei für jeden der Rundfunksender ein dem Rundfunksender zugeordneter Sendebereich ermittelt wird,
(c) Auswählen eines Primärsenders aus der Mehrzahl von Rundfunksendern mittels der Steuereinheit unter Berücksichtigung der Position (402, 403, 404, 405),
(d) Auswählen eines Sekundärsenders aus der Mehrzahl von Rundfunksendern mittels der Steuereinheit unter Berücksichtigung der Position (402, 403, 404, 405),
(e) Festlegen einer ersten Zeitperiode und einer zweiten Zeitperiode mittels der Steuereinheit, sodass, wenn der Sendebereich des Primärsenders größer als der Sendebereich des Sekundärsenders ist, die erste Zeitperiode kürzer als die zweite Zeitperiode ist, und wenn der Sendebereich des Primärsenders kleiner als der Sendebereich des Sekundärsenders ist, die erste Zeitperiode länger als die zweite Zeitperiode ist, wobei die Summe aus der ersten Zeitperiode und der zweiten Zeitperiode einer vorgegebenen Gesamtperiode entspricht,
(f) Empfangen eines Rundfunksignals des Primärsenders mittels der Rundfunk-Empfangseinheit während der ersten Zeitperiode und
(g) Empfangen eines Rundfunksignals des Sekundärsenders mittels der Rundfunk-Empfangseinheit während der zweiten Zeitperiode.

2. Verfahren gemäß Anspruch 1,
bei dem der Primärsender derart ausgewählt wird, dass der Primärsender ein Rundfunksender des Aufenthaltslandes (406) ist, in dem sich die Navigationseinrichtung befindet.

3. Verfahren gemäß Anspruch 2,
bei dem der Sekundärsender derart ausgewählt wird, dass der Sekundärsender kein Rundfunksender des Aufenthaltslandes (406) ist.

4. Verfahren gemäß Anspruch 2,
bei dem der Sekundärsender derart ausgewählt wird, dass der Sekundärsender ein Rundfunksender eines Nachbarlandes (407) des Aufenthaltslandes (406) ist, in welches eine mittels der Navigationseinrichtung berechnete Route (401) führt.

5. Verfahren gemäß Anspruch 2,
bei dem der Sekundärsender derart ausgewählt wird, dass der Sekundärsender ein Rundfunksender des Aufenthaltslandes (406) ist.

6. Verfahren gemäß einem der vorhergehenden Ansprüche,
bei dem der Sekundärsender derart ausgewählt wird, dass ein Sendebereich des Sekundärsenders nicht mit einem Sendebereich des Primärsenders übereinstimmt.

7. Verfahren gemäß einem der vorhergehenden Ansprüche,
bei dem der Primärsender unter Berücksichtigung seiner Empfangsqualität ausgewählt wird oder der Sekundärsender unter Berücksichtigung seiner Empfangsqualität ausgewählt wird.

8. Verfahren gemäß einem der vorhergehenden Ansprüche,
bei dem die Verfahrenschritte (a) bis (g) nochmals ausgeführt werden, nachdem die Verfahrensschritte (a) bis (g) ausgeführt wurden.

9. Verfahren gemäß Anspruch 8,
bei dem die Verfahrensschritte (f) und (g) mehrmals ausgeführt werden, bevor die Verfahrenschritte (a) bis (g) nochmals ausgeführt werden.

10. Verfahren gemäß Anspruch 9,
bei dem die Anzahl der Wiederholungen der Verfahrensschritte (f) und (g) bei einem Ausführen der Verfahrensschritte (a) bis (g) an eine Empfangsqualität des Primärsenders oder des Sekundarsenders angepasst wird.

11. Verfahren gemäß einem der Ansprüche 8 bis 10.
bei dem im Falle eines Fehlers beim Empfangen des Primärsenders oder des Sekundärsenders beim folgenden Empfangen des jeweiligen Rundfunksenders die zugeordnete Zeitperiode angepasst wird.

12. Verfahren gemäß einem der Ansprüche 8 bis 10,
bei dem die im Falle eines Fehlers beim Empfangen des Primärsenders oder des Sekundärsenders beim folgenden Empfangen des jeweiligen Rundfunksenders die zugeordnete Zeitperiode verkürzt wird.

13. Verfahren gemäß einem der vorhergehenden Ansprüche,
bei dem im Falle eines Fehlers beim Empfangen des Primärsenders oder des Sekundärsenders sofort auf den jeweils anderen Rundfunksender abgestimmt wird.

14. Navigationseinrichtung mit
einer Positionsbestimmungseinheit, die zum Bestimmen einer Position (402, 403, 404, 405) der Navigationseinrichtung eingerichtet ist,
einer Rundfunk-Empfangseinheit, die zum Ermitteln einer Mehrzahl von Rundfunksendern, deren Rundfunksignale an der Position (402, 403, 404, 405) empfangbar sind und Verkehrsdaten aufweisen, wobei für jeden der Rundfunksender ein dem Rundfunksender zugeordneter Sendebereich ermittelt wird, zum Empfangen des Rundfunksignals eines Primärsenders während einer ersten Zeitperiode und zum Empfangen des Rundfunksignals eines Sekundärsenders während einer zweiten Zeitperiode eingerichtet ist, und
einer Steuereinheit, die zum Auswählen des Primärsenders aus der Mehrzahl von Rundfunksendern unter Berücksichtigung der Position (402, 403, 404, 405), zum Auswählen des Sekundärsenders aus der Mehrzahl von Rundfunksendern unter Berücksichtigung der Position (402, 403, 404, 405) und zum Festlegen der ersten Zeitperiode und der zweiten Zeitperiode, sodass, wenn der Sendebereich des Primärsenders größer als der Sendebereich des Sekundärsenders ist, die erste Zeitperiode kürzer als die zweite Zeitperiode ist, und, wenn der Sendebereich des Primärsenders kleiner als der Sendebereich des Sekundärsenders ist, die erste Zeitperiode länger als die zweite Zeitperiode ist, wobei die Summe aus der ersten Zeitperiode und der zweiten Zeitperiode einer vorgegebenen Gesamtperiode entspricht, eingerichtet ist.

## Claims

1. Method for receiving traffic data by a navigation device comprising a positioning unit, a broadcast receiver unit, and a control unit, wherein the method comprises the following steps:
(a) determining a position (402, 403, 404, 405) of the navigation device by the positioning unit,
(b) determining a plurality of broadcast stations whose broadcast signals can be received at the position (402, 403, 404, 405) and comprise traffic data by the broadcast receiver unit wherein for each of the broadcast stations a transmission range assigned to the broadcast station is determined,
(c) selecting a primary station from the plurality of broadcast stations by the control unit considering the position (402, 403, 404, 405),
(d) selecting a secondary station from the plurality of broadcast stations by the control unit considering the position (402, 403, 404, 405),
(e) defining a first period of time and a second period of time by the control unit so that, if the transmission range of the primary station is bigger than the transmission range of the secondary station, the first period of time is shorter than the second period of time, and, if the transmission range of the primary station is smaller than the transmission range of the secondary station, the first period of time is longer than the second period of time, wherein the sum of the first period of time and the second period of time corresponds to a predetermined aggregate period,
(f) receiving a broadcast signal of the primary station by the broadcast receiver unit during the first period of time, and
(g) receiving a broadcast signal of the primary station by the broadcast receiver unit during the second period of time.

2. Method according to claim 1
wherein the primary station is selected in such a way that the primary station is a broadcast station of the country of residence (406) in which the navigation device is located.

3. Method according to claim 2
wherein the secondary station is selected in such a way that the secondary station is not a broadcast station of the country of residence (406).

4. Method according to claim 2
wherein the secondary station is selected in such a way that the secondary station is a broadcast station of the neighbouring country (407) of the country of residence (406) into which a route calculated (401) by the navigation device leads.

5. Method according to claim 2
wherein the secondary station is selected in such a way that the secondary station is a broadcast station of the country of residence (406).

6. Method according to one of the preceding claims
wherein the secondary station is selected in such a way that a transmission range of the secondary station does not match a transmission range of the primary station.

7. Method according to one of the preceding claims
wherein the primary station is selected considering its reception quality or the secondary station is selected considering its reception quality.

8. Method according to one of the preceding claims
wherein the method steps (a) to (g) are executed again after executing the method steps (a) to (g).

9. Method according to claim 8
wherein the method steps (f) and (g) are executed repeatedly before the method steps (a) to (g) are executed again.

10. Method according to claim 9
wherein the number of repetitions of the method steps (f) and (g) during one execution of the method steps (a) to (g) is adapted to a reception quality of the primary station or the secondary station.

11. Method according to one of the claims 8 to 10
wherein in case of a failure during the reception of the primary station or the secondary station the period of time assigned to the respective broadcast station is adapted during the following reception of the respective broadcast station.

12. Method according to one of the claims 8 to 10
wherein in case of a failure during the reception of the primary station or the secondary station the period of time assigned to the respective broadcast station is shortened during the following reception of the respective broadcast station.

13. Method according to one of the preceding claims
wherein in case of a failure during the reception of the primary station or the secondary station the respective other station is adjusted immediately.

14. Navigation device comprising:
a positioning unit arranged for determining a position (402, 403, 404, 405) of the navigation device,
a broadcast reception unit arranged for determining a plurality of broadcast stations whose broadcast signals can be received at the position (402, 403, 404, 405) and comprise traffic data, wherein for each of the broadcast stations a transmission range assigned to the broadcast station is determined, for receiving the broadcast signal of a primary station during a first period of time, and for receiving the broadcast signal of a secondary station during a second period of time, and
a control unit arranged for selecting the primary station from the plurality of broadcast stations considering the position (402, 403, 404, 405), for selecting the secondary station from the plurality of broadcast stations considering the position (402, 403, 404, 405), and for defining the first period of time and the second period of time so that, if the transmission range of the primary station is bigger than the transmission range of the secondary station, the first period of time is shorter than the second period of time, and, if the transmission range of the primary station is smaller than the transmission range of the secondary station, the first period of time is longer than the second period of time, wherein the sum of the first period of time and the second period of time corresponds to a predetermined aggregate period.

## Revendications

1. Procédé de réception de données de circulation au moyen d'un dispositif de navigation comportant une unité de localisation servant à déterminer la position, une unité de réception de radiodiffusion et une unité de commande, le procédé étant constitué des étapes suivantes :
(a) détermination d'une position (402, 403, 404, 405) du dispositif de navigation au moyen de l'unité de localisation,
(b) détermination d'une multitude d'émetteurs de radiodiffusion dont les signaux de radiodiffusion peuvent être reçus à cette position (402, 403, 404, 405) et qui diffusent des données de circulation, au moyen de l'unité de réception de radiodiffusion, une plage d'émission étant déterminée pour chaque émetteur de radiodiffusion et affectée à celui-ci,
(c) sélection d'un émetteur primaire parmi la multitude d'émetteurs de radiodiffusion au moyen de l'unité de commande, cette sélection étant réalisée en fonction de la position (402, 403, 404, 405),
(d) sélection d'un émetteur secondaire parmi la multitude d'émetteurs de radiodiffusion au moyen de l'unité de commande, cette sélection étant réalisée en fonction de la position (402, 403, 404, 405),
(e) définition d'une première période et d'une deuxième période au moyen de l'unité de commande de sorte que, lorsque la plage d'émission de l'émetteur primaire est plus grande que la plage d'émission de l'émetteur secondaire, la première période soit plus courte que la deuxième et que,
lorsque la plage d'émission de l'émetteur primaire est plus petite que la plage d'émission de l'émetteur secondaire, la première période soit plus longue que la deuxième, la somme de la première période et de la deuxième période étant égale à une période totale définie,
(f) réception d'un signal de radiodiffusion du premier émetteur au moyen de l'unité de réception de radiodiffusion pendant la première période, et
(g) réception d'un signal de radiodiffusion du deuxième émetteur au moyen de l'unité de réception de radiodiffusion pendant la deuxième période.

2. Procédé selon la revendication 1,
l'émetteur primaire étant sélectionné de sorte que l'émetteur primaire soit un émetteur de radiodiffusion du pays de séjour (406) dans lequel se trouve le dispositif de navigation.

3. Procédé selon la revendication 2,
l'émetteur secondaire étant sélectionné de sorte que l'émetteur secondaire ne soit pas un émetteur de radiodiffusion du pays de séjour (406).

4. Procédé selon la revendication 2,
l'émetteur secondaire étant sélectionné de sorte que l'émetteur secondaire soit un émetteur de radiodiffusion d'un pays voisin (407) du pays de séjour (406), dans lequel mène un itinéraire (401) calculé au moyen du dispositif de navigation.

5. Procédé selon la revendication 2,
l'émetteur secondaire étant sélectionné de sorte que l'émetteur secondaire soit un émetteur de radiodiffusion du pays de séjour (406).

6. Procédé selon l'une des revendications précédentes,
l'émetteur secondaire étant sélectionné de sorte qu'une plage d'émission de l'émetteur secondaire ne coïncide pas avec une plage d'émission de l'émetteur primaire.

7. Procédé selon l'une des revendications précédentes,
l'émetteur primaire étant sélectionné en fonction de la qualité de réception, ou l'émetteur secondaire étant sélectionné en fonction de la qualité de réception.

8. Procédé selon l'une des revendications précédentes,
les étapes (a) à (g) étant exécutées une deuxième fois après l'exécution des étapes (a) à (g).

9. Procédé selon la revendication 8,
les étapes (f) et (g) étant exécutées plusieurs fois avant la deuxième exécution des étapes (a) à (g).

10. Procédé selon la revendication 9,
le nombre de répétitions des étapes (f) et (g) lors de l'exécution des étapes (a) à (g) étant fonction de la qualité de réception de l'émetteur primaire ou de l'émetteur secondaire.

11. Procédé selon l'une des revendications 8 à 10,
la période affectée étant adaptée en cas d'erreur de réception de l'émetteur primaire ou de l'émetteur secondaire pour la réception suivante de l'émetteur de radiodiffusion respectif.

12. Procédé selon l'une des revendications 8 à 10,
la période affectée étant raccourcie en cas d'erreur de réception de l'émetteur primaire ou de l'émetteur secondaire pour la réception suivante de l'émetteur de radiodiffusion respectif.

13. Procédé selon l'une des revendications précédentes,
une adaptation à l'autre émetteur de radiodiffusion étant immédiatement effectuée en cas d'erreur de réception de l'émetteur primaire ou de l'émetteur secondaire.

14. Dispositif de navigation comportant
une unité de localisation configurée pour déterminer une position (402, 403, 404, 405) du dispositif de navigation,
une unité de réception de radiodiffusion configurée pour déterminer une multitude d'émetteurs de radiodiffusion dont les signaux de radiodiffusion peuvent être reçus à cette position (402, 403, 404, 405) et qui diffusent des données de circulation, une plage d'émission étant déterminée pour chaque émetteur de radiodiffusion et affectée à celui-ci, pour recevoir le signal de radiodiffusion d'un émetteur primaire pendant une première période et pour recevoir le signal de radiodiffusion d'un émetteur secondaire pendant une deuxième période, et
une unité de commande pour sélectionner l'émetteur primaire parmi la multitude d'émetteurs de radiodiffusion, cette sélection étant réalisée en fonction de la position (402, 403, 404, 405), pour sélectionner l'émetteur secondaire parmi la multitude d'émetteurs de radiodiffusion, cette sélection étant réalisée en fonction de la position (402, 403, 404, 405), et pour définir la première période et la deuxième période de sorte que, lorsque la plage d'émission de l'émetteur primaire est plus grande que la plage d'émission de l'émetteur secondaire, la première période soit plus courte que la deuxième et que, lorsque la plage d'émission de l'émetteur primaire est plus petite que la plage d'émission de l'émetteur secondaire, la première période soit plus longue que la deuxième, la somme de la première période et de la deuxième période étant égale à une période totale définie.
